# EUROPEAN PATENT APPLICATION

(11) **EP 4 354 039 A1**
(43) Date of publication of application: **17.04.2024**
(21) Application number: 23202976.9
(22) Date of filing: 11.10.2023
(51) Int. Cl.: F24F 13/14, G05G 1/02, G05G 1/08, F16K 37/00

(54) **ACTUATOR OF HVAC UNIT**

(30) Priority: 11.10.2022 US 202263414960 P
(71) Applicant: Johnson Controls Tyco IP Holdings LLP, Milwaukee, WI 53209 (US)
(72) Inventor: LOVATI, Mattia, 20031 Cesate, Milano (IT); CAROZZI, Michele, 23871 Lomagna, Lecco (IT); VISCARDI, Claudio, 23880 Casatenovo, Lecco (IT)
(74) Representative: Meissner Bolte Partnerschaft mbB

(57) **Abstract**

The present disclosure relates to an actuator comprising an actuating arm, a magnetic slider to select one of a plurality of stroke positions of the actuating arm, one or more sensors to determine a selected stroke position, and a processing circuit. The processing circuit operates the actuating arm based on the selected stroke position.

## Description

### CROSS-REFERENCE TO RELATED APPLICATIONS

This application claims the benefit of and priority to U.S. Provisional Application No. 63/414,960, filed October 11, 2022, the entire disclosure of which is hereby incorporated by reference herein.

### BACKGROUND

The present disclosure relates generally to an actuator of heating, ventilating, or air conditioning (HVAC) unit or an environmental control device.

Actuators are used to operate a wide variety of HVAC components such as air dampers, fluid valves, air handling units, and other components that are used in HVAC systems. For example, an actuator can be coupled to a damper in an HVAC system and can be used to drive the damper between an open position and a closed position. An actuator typically includes a motor and a drive device (e.g., a hub, a drive train) that is driven by the motor and coupled to an HVAC component.

Typically, a demand for smarter and easy to commission actuators is increasing. As mentioned above, actuators control various HVAC equipment such as valves, dampers etc. Generally, stroke setting of actuator is performed to regulate valve flow rate time-to-time in order to satisfy customers' demands and perform different operations. However, stroke setting and regulating the valve flow rate requires expensive commissioning, since the actuator is required to be powered off and unmounted from the valve assembly. Also, dedicated tools are used to operate the actuator and regulate the valve flow rate, that can be expensive to manufacture and complex. Such commissioning to regulate valve flow rate or control any other HVAC equipment is expensive, complex, and time consuming.

There is a need to provide an assembly for the actuators that alleviates the above drawbacks.

### SUMMARY

One implementation of the present disclosure relates to an actuator comprising an actuating arm, a magnetic slider to select one of a plurality of stroke positions of the actuating arm, one or more sensors to determine a selected stroke position, and a processing circuit. The processing circuit is configured to operate the actuating arm based on the selected stroke position.

Some embodiments relate to an actuator. The actuator includes an actuating arm, a magnetic slider configured to select one of a number of stroke positions of the actuating arm, one or more sensors configured to determine a selected stroke position, and a processing circuit configured to operate the actuating arm based on the selected stroke position.

In some embodiments, the processing circuit generates a first control signal to operate the actuating arm. The first control signal is generated based on the selected stroke position and an auxiliary signal provided by a controller.

In some embodiments, the processing circuit generates a second control signal to operate the actuating arm. The second control signal is generated based on the selected stroke position. In some embodiments, the actuating arm is coupled to one of a valve, a damper, and a louver. In some embodiments, the one or more sensors are selected from a group consisting of hall effect sensors, 3-D magnetic sensors, potentiometers, optical sensors, proximity sensors, and magneto-resistive sensors.

In some embodiments, the magnetic slider is one of a linearly movable magnetic slider and a rotatably movable magnetic slider. In some embodiments, the magnetic slider is provided on an outer surface of an enclosure of the actuator. In some embodiments, the magnetic slider is integral to the enclosure. In some embodiments, the magnetic slider is detachably coupled to the enclosure.

Some embodiments relate to a heating, ventilating, or air conditioning device. The HVAC device includes an actuating arm, a magnetic slider configured for selection of one of a number of stroke positions of the actuating arm, a sensor, and a circuit. The circuit is configured to operate the actuating arm based on a selected stroke position sensed by the sensor.

In some embodiments, the circuit generates a first control signal to operate the actuating arm. The first control signal is generated based on the selected stroke position and an auxiliary signal provided by a controller.

In some embodiments, the circuit generates a second control signal to operate the actuating arm. The second control signal is generated based on the selected stroke position. In some embodiments, the actuating arm is coupled to one of a valve, a damper, and a louver. In some embodiments, the sensor is selected from a group consisting of hall effect sensors, 3-D magnetic sensors, potentiometers, optical sensors, proximity sensors, and magneto-resistive sensors. In some embodiments, the magnetic slider is one of a linearly movable magnetic slider and a rotatably movable magnetic slider. In some embodiments, the magnetic slider is provided on an outer surface of an enclosure of the device. In some embodiments, the selected stroke position overrides an electronic stroke position.

Some embodiments relate to a method of operating an actuator. The method includes determining a position of a slider using magnetics, and moving an actuating arm of the actuator to a stroke position of the actuating arm related to the position of the slider.

In some embodiments, a processing circuit generates a first control signal to operate the actuating arm, where the first control signal is generated based on the position of the slider and an auxiliary signal provided by a controller. In some embodiments, the processing circuit generates a second control signal to operate the actuating arm, where the second control signal is generated based on the position of the slider.

Those skilled in the art will appreciate that the summary is illustrative only and is not intended to be in any way limiting. Other aspects, inventive features, and advantages of the devices and/or processes described herein, as defined solely by the claims, will become apparent in the detailed description set forth herein and taken in conjunction with the accompanying drawings.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a perspective view drawing of an actuator assembly, according to some embodiments.
FIG. 2 is a perspective view drawing of an actuator that can be implemented in the actuator assembly of FIG. 1, according to some embodiments.
FIG. 3 is a top view drawing of the actuator of FIG. 2, according to some embodiments.
FIG. 4 is a bottom view drawing of the actuator of FIG. 2, according to some embodiments.
FIG. 5 is a block diagram of a smart actuator that can be provided in the actuator assembly of FIG. 1, according to some embodiments.
FIG. 6 is an assembly having an actuator enclosure and an HVAC equipment, according to some embodiments.
FIG. 7 is a detailed view illustrating the assembly of FIG. 6, according to some embodiments.
FIG. 8 illustrates an example of positioning of a magnetic slider of FIG. 6, according to some embodiments.
FIG. 9 illustrates a configuration of the magnetic slider integrated in the actuator enclosure, according to some embodiments.
FIG. 10 illustrates a configuration of the magnetic slider detachably coupled to the actuator enclosure, according to some embodiments.

### DETAILED DESCRIPTION

### Overview

Before turning to the Figures, it should be understood that the disclosure is not limited to the details or methodology set forth in the description or illustrated in the figures. It should also be understood that the terminology is for the purpose of description only and should not be regarded as limiting.

Referring generally to the FIGURES, an actuator of an HVAC unit is shown, according to some embodiments.

### HVAC Actuator Assemblies

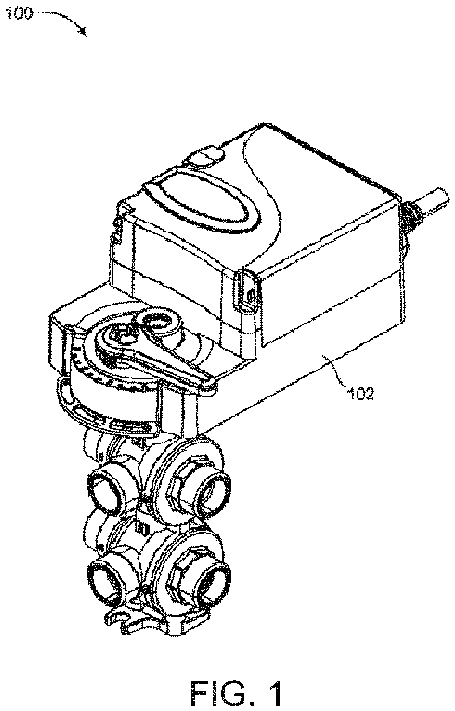

Referring now to FIG. 1, a view of an actuator assembly 100 is shown, according to some embodiments. Actuator assembly 100 may be used in an HVAC system, a waterside system, an airside system, or a building management system (BMS). Actuator assembly 100 is shown to include an actuator 102. In some embodiments, the actuator 102 may be configured to actuate a valve member of a valve and control fluid flow through a valve body to regulate a flow of fluid through a conduit, pipe, or tube.

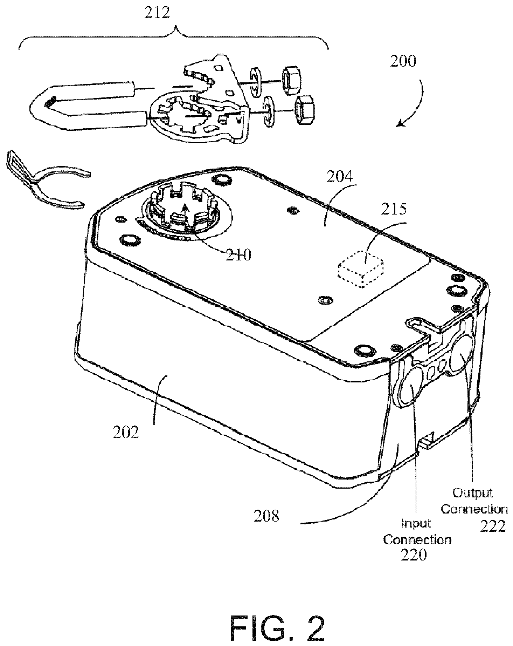

Referring now to FIGS. 2-4, an actuator 200 for use in a HVAC system is shown, according to an exemplary embodiment. For example, actuator 200 may be a damper actuator, a valve actuator, a fan actuator, a pump actuator, or any other type of actuator that can be used in a HVAC system or BMS. In various embodiments, actuator 200 may be a linear actuator (e.g., a linear proportional actuator), a non-linear actuator, a spring return actuator, or a non-spring return actuator.

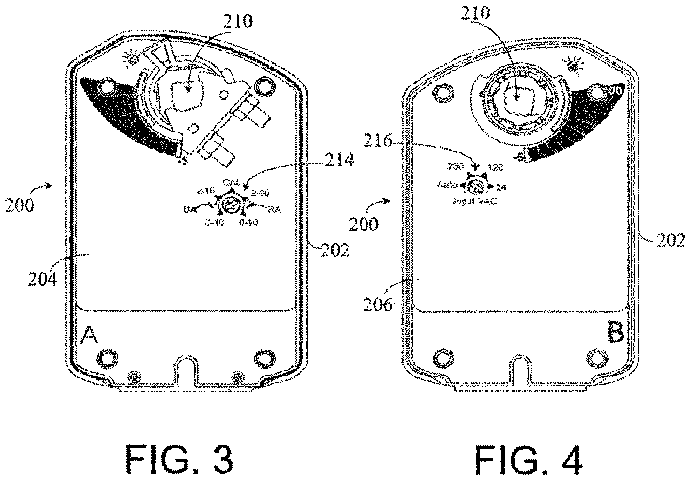

Actuator 200 is shown to include a housing 202 having a front side 204 (i.e., side A), a rear side 206 (i.e., side B shown in FIG. 4) opposite front side 204, and a bottom 208. Housing 202 may contain the mechanical and processing components of actuator 200. In some embodiments, housing 202 contains a brushless direct current (BLDC) motor and a processing circuit configured to provide a pulse width modulated (PWM) DC output to control the speed of the BLDC motor. The processing circuit may be configured to compare a representation of the electric current output to the BLDC motor to a threshold and may hold the PWM DC output in an off state when the current exceeds the threshold. The processing circuit may also be configured to set the PWM DC output to zero and then ramp up the PWM DC output when actuator 200 approaches an end stop.

Actuator 200 is shown to include a drive device 210. Drive device 210 may be a drive mechanism, a hub, or other device configured to drive or effectuate movement of a HVAC system component. For example, drive device 210 may be configured to receive a shaft of a damper, a valve, or any other movable HVAC system component in order to drive (e.g., rotate) the shaft. In some embodiments, actuator 200 includes a coupling device 212 configured to aid in coupling drive device 210 to the movable HVAC system component. For example, coupling device 212 may facilitate attaching drive device 210 to a valve or damper shaft.

Actuator 200 is shown to include an input connection 220 and an output connection 222. In some embodiments, input connection 220 and output connection 222 are located along bottom 208. In other embodiments, input connection 220 and output connection 222 may be located along one or more other surfaces of housing 202. Input connection 220 may be configured to receive a control signal (e.g., a voltage input signal) from an external system or device. Actuator 200 may use the control signal to determine an appropriate PWM DC output for the BLDC motor. In some embodiments, the control signal is received from a controller such as an AHU controller, an economizer controller, a supervisory controller, a zone controller, a field controller, an enterprise level controller, a motor controller, an equipment-level controller (e.g., an actuator controller) or any other type of controller that can be used in a HVAC system or BMS.

In some embodiments, the control signal is a DC voltage signal. Actuator 200 may be a linear proportional actuator configured to control the position of drive device 210 according to the value of the DC voltage received at input connection 220. For example, a minimum input voltage (e.g., 0.0 VDC) may correspond to a minimum rotational position of drive device 210 (e.g., 0 degrees, -5 degrees), whereas a maximum input voltage (e.g., 10.0 VDC) may correspond to a maximum rotational position of drive device 210 (e.g., 90 degrees, 95 degrees). Input voltages between the minimum and maximum input voltages may cause actuator 200 to move drive device 210 into an intermediate position between the minimum rotational position and the maximum rotational position. In other embodiments, actuator 200 may be a non-linear actuator or may use different input voltage ranges or a different type of input signal (e.g., AC voltage or current) to control the position and/or rotational speed of drive device 210.

In some embodiments, the control signal is an AC voltage signal. Input connection 220 may be configured to receive an AC voltage signal having a standard power line voltage (e.g., 120 VAC or 230 VAC at 50/60 Hz). The frequency of the voltage signal may be modulated (e.g., by a controller for actuator 200) to adjust the rotational position and/or speed of drive device 210. In some embodiments, actuator 200 uses the voltage signal to power various components of actuator 200. Actuator 200 may use the AC voltage signal received via input connection 220 as a control signal, a source of electric power, or both. In some embodiments, the voltage signal is received at input connection 220 from a power supply line that provides actuator 200 with an AC voltage having a constant or substantially constant frequency (e.g., 120 VAC or 230 VAC at 50 Hz or 60 Hz). Input connection 220 may include one or more data connections (separate from the power supply line) through which actuator 200 receives control signals from a controller or another actuator (e.g., 0-10 VDC control signals).

In some embodiments, the control signal is received at input connection 220 from another actuator. For example, if multiple actuators are interconnected in a tandem arrangement, input connection 220 may be connected (e.g., via a communications bus) to the output data connection of another actuator. One of the actuators may be arranged as a master actuator with its input connection 220 connected to a controller, whereas the other actuators may be arranged as slave actuators with their respective input connections connected to the output connection 222 of the master actuator.

Output connection 222 may be configured to provide a feedback signal to a controller of the HVAC system or BMS in which actuator 200 is implemented (e.g., an AHU controller, an economizer controller, a supervisory controller, a zone controller, a field controller, an enterprise level controller). The feedback signal may indicate the rotational position and/or speed of actuator 200. In some embodiments, output connection 222 may be configured to provide a control signal to another actuator (e.g., a slave actuator) arranged in tandem with actuator 200. Input connection 220 and output connection 222 may be connected to the controller or the other actuator via a communications bus. The communications bus may be a wired or wireless communications link and may use any of a variety of disparate communications protocols (e.g., BACnet, LON, WiFi, Bluetooth, NFC, TCP/IP).

Still referring to FIGS. 2-4, actuator 200 is shown to include a first user-operable switch 214 located along front side 204 (shown in FIG. 3) and a second user-operable switch 216 located along rear side 206 (shown in FIG. 4). Switches 214-216 may be potentiometers or any other type of switch (e.g., push button switches such as switch 215, dials, flippable switches). Switches 214-216 may be used to set actuator 200 to a particular operating mode or to configure actuator 200 to accept a particular type of input. However, it should be understood that switches 214-216 are optional components and are not required for actuator 200 to perform the processes described herein. As such, one or more of switches 214-216 may be omitted without departing from the teachings of the present application.

Referring particularly to FIG. 3, switch 214 may be a mode selection switch having a distinct number of modes or positions. Switch 214 may be provided for embodiments in which actuator 200 is a linear proportional actuator that controls the position of drive device 210 as a function of a DC input voltage received at input connection 220. In some embodiments, the function of mode selection switch 214 is the same or similar to the function of the mode selection switch described in U.S. Patent Application No. 14/727,284, filed June 1, 2015, the entire disclosure of which is incorporated by reference herein. For example, the position of mode selection switch 214 may be adjusted to set actuator 200 to operate in a direct acting mode, a reverse acting mode, or a calibration mode.

Mode selection switch 214 is shown to include a 0-10 direct acting (DA) mode, a 2-10 DA mode, a calibration (CAL) mode, a 2-10 reverse acting (RA) mode, and a 0-10 RA mode. According to other exemplary embodiments, mode selection switch 214 may have a greater or smaller number of modes and/or may have modes other than listed as above. The position of mode selection switch 214 may define the range of DC input voltages that correspond to the rotational range of drive device 210. For example, when mode selection switch 214 is set to 0-10 DA, an input voltage of 0.0 VDC may correspond to 0 degrees of rotation position for drive device 210. For this same mode, an input voltage of 1.7 VDC may correspond to 15 degrees of rotation position, 3.3 VDC may correspond to 30 degrees of rotation position, 5.0 VDC may correspond to 45 degrees of rotation position, 6.7 VDC may correspond to 60 degrees of rotation position, 8.3 VDC may correspond to 75 degrees of rotation position, and 10.0 VDC may correspond to 90 degrees of rotation position. It should be understood that these voltages and corresponding rotational positions are merely exemplary and may be different in various implementations.

Referring particularly to FIG. 4, switch 216 may be a mode selection switch having a distinct number or modes or positions. Switch 216 may be provided for embodiments in which actuator 200 is configured to accept an AC voltage at input connection 220. In some embodiments, the function of mode selection switch 216 is the same or similar to the function of the mode selection switch described in U.S. Patent Application No. 14/475,141, filed September 1, 2014, the entire disclosure of which is incorporated by reference herein. For example, the position of switch 216 may be adjusted to set actuator 200 to accept various different AC voltages at input connection 220.

Mode selection switch 216 is shown to include a "24 VAC" position, a "120 VAC" position, a "230 VAC" position, an "Auto" position. Each position of switch 216 may correspond to a different operating mode. According to other exemplary embodiments, switch 216 may have a greater or lesser number of positions and/or may have modes other than the modes explicitly listed. The different operating modes indicated by switch 216 may correspond to different voltage reduction factors applied to the input voltage received at input connection 220.

For example, with switch 216 in the 24 VAC position, actuator 200 may be configured to accept an input voltage of approximately 24 VAC (e.g., 20-30 VAC) at input connection 220 and may apply a reduction factor of approximately 1 to the input voltage. With switch 216 in the 120 VAC position, actuator 200 may be configured to accept an input voltage of approximately 120 VAC (e.g., 100-140 VAC, 110-130 VAC) at input connection 220 and may apply a reduction factor of approximately 5 (e.g., 3-7, 4-6, 4.5-5.5) to the input voltage. With switch 216 in the 230 VAC position, actuator 200 may be configured to accept an input voltage of approximately 230 VAC (e.g., 200-260 VAC, 220-240 VAC) at input connection 220 and may apply a reduction factor of approximately 9.6 (e.g., 7-13, 8-12, 9-10) to the input voltage. With switch 216 in the "Auto" position, actuator 200 may be configured automatically determine the input voltage received at input connection 220 and may adjust the voltage reduction factor accordingly.

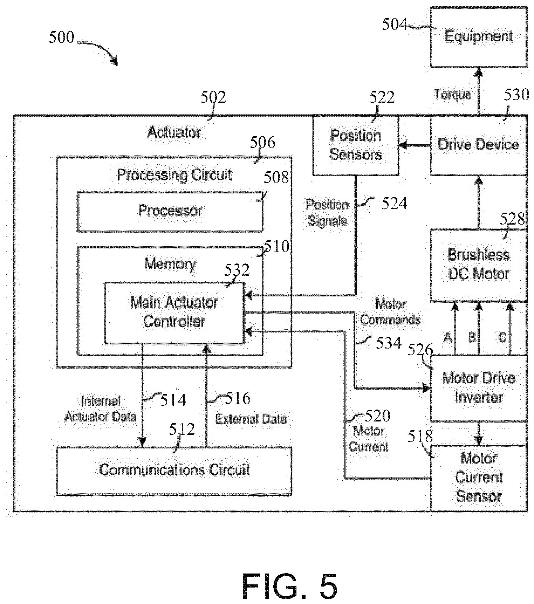

Turning now to FIG. 5, a block diagram of a smart actuator device 500 is shown, according to some embodiments. Smart actuator device 500 may be an actuator that performs control loop functions. For example, applications of smart actuator device 500 may include pressure disturbance rejections in actuator control, fan coil control, hydronic system control, 6-way ball valve control for chilled beams, distributed air handling unit (AHU) control, variable water flow (VWF) control, and water system control. Actuator 502 may be configured to operate equipment 504. Equipment 504 may include any type of device that can be operated by an actuator. In an exemplary embodiment, actuator 502 and equipment 504 (e.g., a valve) are packaged within a common integrated device chassis. In other embodiments, actuator 502 and equipment 504 are packaged as separate components.

Actuator 502 is shown to include a processing circuit 506 communicably coupled to BLDC motor 528. Processing circuit 506 is shown to include a processor 508, memory 510, and a main actuator controller 532. Processor 508 can be a general purpose or specific purpose processor, an application specific integrated circuit (ASIC), one or more field programmable gate arrays (FPGAs), a group of processing components, or other suitable processing components. Processor 508 can be configured to execute computer code or instructions stored in memory 510 or received from other computer readable media (e.g., CDROM, network storage, a remote server).

Memory 510 may include one or more devices (e.g., memory units, memory devices, storage devices) for storing data and/or computer code for completing and/or facilitating the various processes described in the present disclosure. Memory 510 may include random access memory (RAM), read-only memory (ROM), hard drive storage, temporary storage, non-volatile memory, flash memory, optical memory, or any other suitable memory for storing software objects and/or computer instructions. Memory 510 may include database components, object code components, script components, or any other type of information structure for supporting the various activities and information structures described in the present disclosure. Memory 510 can be communicably connected to processor 508 via processing circuit 506 and may include computer code for executing (e.g., by processor 508) one or more processes described herein. When processor 508 executes instructions stored in memory 510, processor 508 generally configures actuator 502 (and more particularly processing circuit 506) to complete such activities.

Main actuator controller 532 may be configured to receive external control data 516 (e.g., position setpoints, speed setpoints) from communications circuit 512 and position signals 524 from position sensors 522. Main actuator controller 532 may be configured to determine the position of BLDC motor 528 and/or drive device 530 based on position signals 524. In some embodiments, main actuator controller 532 receives data from additional sources. For example, motor current sensor 518 may be configured to measure the electric current provided to BLDC motor 528. Motor current sensor 518 may generate a feedback signal indicating the motor current 520 and may provide this signal to main actuator controller 532 within processing circuit 506.

Still referring to FIG. 5, processing circuit 506 may be configured to output a PWM DC motor command 534 to control the speed of the BLDC motor. BLDC motor 528 may be configured to receive a three-phase PWM voltage output (e.g., phase A, phase B, phase C) from motor drive inverter 526. The duty cycle of the PWM voltage output may define the rotational speed of BLDC motor 528 and may be determined by processing circuit 506 (e.g., a microcontroller). Processing circuit 506 may increase the duty cycle of the PWM voltage output to increase the speed of BLDC motor 528 and may decrease the duty cycle of the PWM voltage output to decrease the speed of BLDC motor 528.

BLDC motor 528 may be coupled to drive device 530. Drive device 530 may be a drive mechanism, a hub, or other device configured to drive or effectuate movement of a HVAC system component (e.g., equipment 504). For example, drive device 530 may be configured to receive a shaft of a damper, a valve, or any other movable HVAC system component in order to drive (e.g., rotate) the shaft. In some embodiments, actuator 502 includes a coupling device configured to aid in coupling drive device 530 to the movable HVAC system component. For example, the coupling device may facilitate attaching drive device 530 to a valve or damper shaft.

Position sensors 522 may include Hall effect sensors, potentiometers, optical sensors, or other types of sensors configured to measure the rotational position of BLDC motor 528 and/or drive device 530. Position sensors 522 may provide position signals 524 to processing circuit 506. Main actuator controller 532 may use position signals 524 to determine whether to operate BLDC motor 528. For example, main actuator controller 532 may compare the current position of drive device 530 with a position setpoint received via external data input 516 and may operate BLDC motor 528 to achieve the position setpoint.

Actuator 502 is further shown to include a communications circuit 512. Communications circuit 512 may be a wired or wireless communications link and may use any of a variety of disparate communications protocols (e.g., BACnet, LON, WiFi, Bluetooth, NFC, TCP/IP). In some embodiments, communications circuit 512 is an integrated circuit, chip, or microcontroller unit (MCU) configured to bridge communications between actuator 502 and external systems or devices. In some embodiments, communications circuit 512 is the Johnson Controls BACnet on a Chip (JBOC) product. For example, communications circuit 512 can be a pre-certified BACnet communication module capable of communicating on a building automation and controls network (BACnet) using a master/slave token passing (MSTP) protocol. Communications circuit 512 can be added to any existing product to enable BACnet communication with minimal software and hardware design effort. In other words, communications circuit 512 provides a BACnet interface for smart actuator device 500. Further details regarding the JBOC product are disclosed in U.S. Patent Application No. 15/207,431 filed July 11, 2016, the entire disclosure of which is incorporated by reference herein.

Communications circuit 512 may also be configured to support data communications within actuator 502. In some embodiments, communications circuit 512 may receive internal actuator data 514 from main actuator controller 532. For example, internal actuator data 514 may include the sensed motor current 520, a measured or calculated motor torque, the actuator position or speed, configuration parameters, end stop locations, stroke length parameters, commissioning data, equipment model data, firmware versions, software versions, time series data, a cumulative number of stop/start commands, a total distance traveled, an amount of time required to open/close equipment 504 (e.g., a valve), or any other type of data used or stored internally within actuator 502. In some embodiments, communications circuit 512 may transmit external data 516 to main actuator controller 532. External data 516 may include, for example, position setpoints, speed setpoints, control signals, configuration parameters, end stop locations, stroke length parameters, commissioning data, equipment model data, actuator firmware, actuator software, or any other type of data which can be used by actuator 502 to operate BLDC motor 528 and/or drive device 530.

### Actuator of HVAC Unit

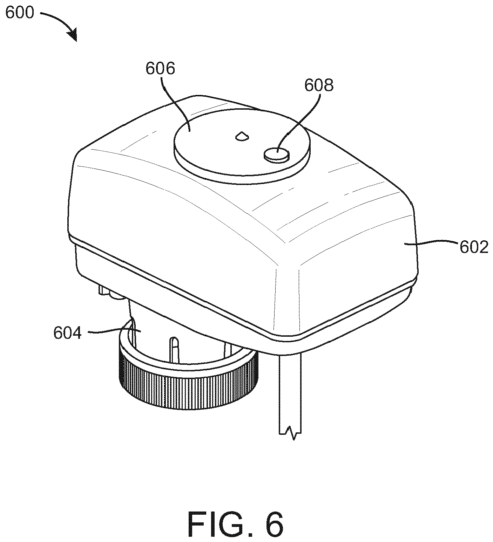

Referring now to FIG. 6, an assembly 600 having an actuator enclosure 602 and an HVAC equipment 604 is shown, according to some embodiments. Assembly 600 can be utilized as actuator assembly 100 (FIG. 1), actuator 200 (FIG. 2), and/or smart actuator device 500 and include the components described above with reference to FIG. 5.

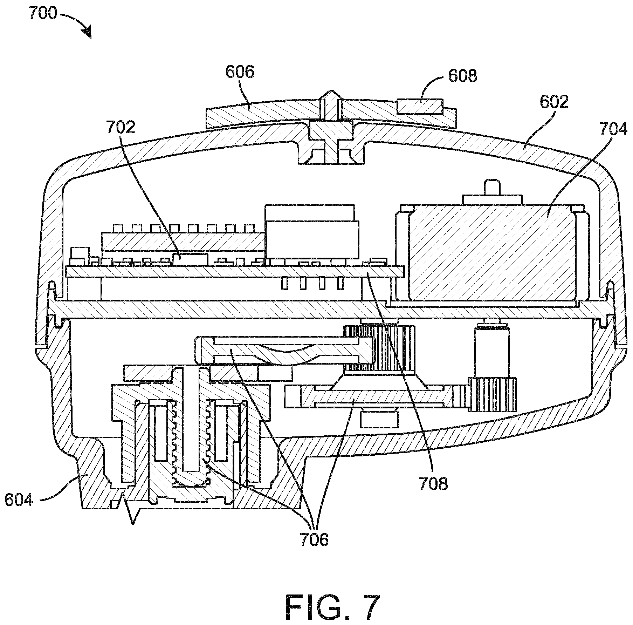

Referring now to FIG. 7, a detailed view 700 illustrating the assembly 600 of FIG. 6 is shown, according to some embodiments. Assembly 600 is discussed below with reference to FIG. 6 and FIG. 7 as follows.

Fig. 6 shows the assembly 600 having the actuator enclosure 602 and the HVAC equipment 604. The HVAC equipment 604 is herein after referred as a valve assembly 604 (such as a pressure-independent control valves (PICV). However, the HVAC equipment 604 can be one of a damper, louver, compressor, blower, or valve, any other type of HVAC equipment. In an embodiment, the actuator enclosure 602 and valve assembly 604 are packaged within a common integrated device chassis. In other embodiments, the actuator enclosure 602 and the valve assembly 604 are packaged as separate components. In some embodiments, an actuator (such as the actuator described in foregoing paragraphs with reference to FIGs 1-5) may be provided within the actuator enclosure 602. In some embodiments, the actuator may be one of, but not limited to, a damper actuator, a valve actuator, a fan actuator, a pump actuator, or any other type of actuator that can be used in a HVAC system or BMS. In various embodiments, the actuator may be a linear actuator (e.g., a linear proportional actuator), a non-linear actuator, a spring return actuator, or a non-spring return actuator.

In some embodiments, the actuator may comprise a motor 704 such as a brushless direct current (BLDC) motor, and an actuating arm (not shown) provided within the actuator enclosure 602. Motor 704 can be any type of electric or hydraulic motor in some embodiments. The actuating arm may be coupled to one of the valve assembly 604, damper, louver or any other HVAC equipment. The actuating arm may be configured to control the valve assembly 604, for example, the actuating arm may actuate a valve member of the valve assembly 604 to control fluid flow (valve flow rate) through the valve assembly 604. In some embodiments, the valve member to be controlled is mechanically coupled to the actuator via one or more gears 706.

Typically, the valve flow rate may be regulated by adjusting the valve member such as a valve stem of the valve assembly 604 by operating the actuating arm. Conventionally, in order to adjust position of the valve stem, the actuator is powered off and the actuator enclosure 602 is generally unmounted from the valve assembly 604 and then a dedicated tool is used to regulate the valve flow rate. Unlike, conventional techniques, a magnetic slider (including a magnet 608 placed on a slider 606) may be provided on an outer surface of the actuator enclosure 602 to operate the actuating arm for regulating the valve flow rate. For example, the magnetic slider may be provided over a top outer surface of the actuator enclosure 602.

The magnetic slider may be one of a linearly movable magnetic slider, a rotatably movable magnetic slider or any other type of magnetic slider. The magnetic slider is easy to use and inexpensive as compared to conventional tools for regulating the valve flow rates. The magnetic slider may be moved to select one of a plurality of stroke positions. In some embodiments, the plurality of stroke positions may indicate a desired stroke position to operate the actuating arm that may further operate the valve assembly 604. In some embodiments, one or more indications corresponding to the plurality of stroke positions may be provided on the outer surface of the actuator enclosure 602.

Further, the actuator may comprise one or more sensors 702 (shown in FIG. 7) placed within the actuator enclosure 602. In some embodiments, the one or more sensors 702 may be located external to the actuator enclosure 602. In some embodiments, the one or more sensors 702 may be the position sensors 522 (referred above in FIG. 5). The one or more sensors 702 may be selected from a group consisting of, but not limited to, hall effect sensors, 3-D magnetic sensors, potentiometers, optical sensors, proximity sensors, magneto-resistive sensors, etc. The one or more sensors 702 may be configured to sense a position (current position) of the magnet 608 to determine a selected stroke position.

In some embodiments, the actuator may also comprise a processing circuit 708 provided within the actuator enclosure 602. In other embodiments, the processing circuit 708 may be located external to the actuator enclosure 602. The processing circuit 708 may be configured to communicate with the one or more sensors 702 to obtain the position of the magnet 608 to determine the selected stroke position. In some embodiments, the processing circuit 708 may communicate with the one or more sensors 702 via a communication interface (not shown). The communication interface may include wired or wireless interfaces (e.g., jacks, antennas, transmitters, receivers, transceivers, wire terminals, etc.) for conducting data communications with various systems, devices, or networks. For example, communication interface may include an Ethernet card and port for sending and receiving data via an Ethernet-based communications network and/or a Wi-Fi transceiver for communicating via a wireless communications network. Communication interface may be configured to communicate via local area networks or wide area networks (e.g., the Internet, a building WAN, etc.) and may use a variety of communication protocols (e.g., BACnet, IP, LON, etc.). The communication interface may be a network interface configured to facilitate electronic data communications between the processing circuit 708 and various external systems or devices (e.g., sensors 702, external controllers etc.).

The processing circuit 708 may be further configured to operate the actuating arm based on the selected stroke position. In some embodiments, the processing circuit 708 may generate a first control signal to operate the actuating arm. The first control signal may be generated based on the selected stroke position and an auxiliary signal provided by a controller. In some embodiments, the auxiliary signal may be either received from an external controller (such as an HVAC controller or a BMS controller) or generated internally by the actuator. In some embodiments, the processing circuit 708 may provide a command to the motor 704 in the actuator enclosure 602 to operate the actuating arm based on the first control signal. The actuating arm may further operate the valve assembly 604 based on the first control signal. In other words, the processing circuit 708 may regulate the valve flow rate of the valve assembly 604 by operating the valve assembly 604 based on the first control signal.

In some other embodiments, the processing circuit 708 may generate a second control signal to operate the actuating arm. The second control signal may be generated based on the selected stroke position and the auxiliary signal is overridden in this case. In some embodiments, the plurality of stroke positions may include one or more override positions. The processing circuit 708 may generate the second control signal, when one of the override positions is selected. In such case, the processing circuit 708 may override the auxiliary signal and generate the second control signal based on the selected override position. Further, the processing circuit 708 may operate the actuating arm based on the selected override position. The actuating arm may further operate the valve assembly 604 based on the selected override position.

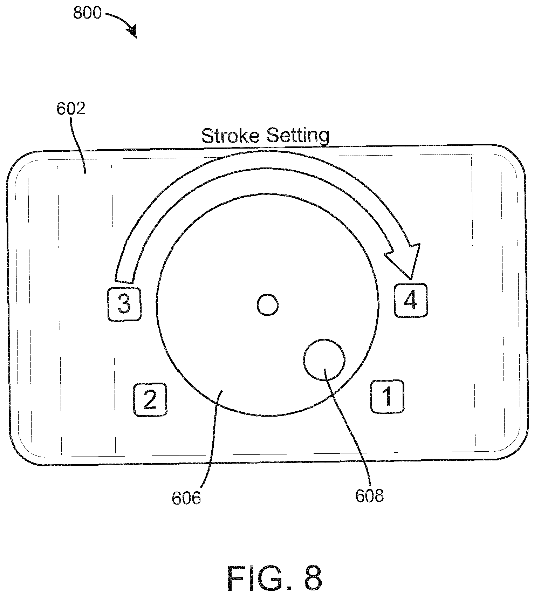

Referring now to FIG. 8, an example 800 of positioning of the magnetic slider of FIG. 6 is shown, according to some embodiments.

The example 800 shows positioning of the magnetic slider, where the magnet 608 may be moved along with the slider 606 to one of the plurality of stroke positions, such as position 1, position 2, position 3, position 4, or any position between position 3 and position 4. As referred above, the plurality of stroke positions may indicate a desired stroke position to operate the actuating arm that may further operate the valve assembly 604. The position 1 may indicate a fully retracted stroke position, position 2 may indicate a fully extended stroke position, position 3 may indicate a minimum stroke, and position 4 may indicate a maximum stroke.

In some embodiments, one or more stroke positions may indicate a stroke setting mode such as position 3, position 4, or any position between position 3 and position 4. In such case, if a user selects one of the stroke positions by placing the magnet 608 at one of a position 3, position 4, or any position between position 3 and position 4, the processing circuit 708 may generate the first control signal based on the selected stroke position and the auxiliary signal (provided by the controller). The actuating arm may be operated based on the first control signal i.e., the actuating arm may be operated at an optimum stroke position by analyzing the selected stroke position as well as the auxiliary signal.

In some other embodiments of the stroke setting mode, a maximum stroke setting of the actuating arm may be performed to control a maximum valve flow rate of the valve assembly 604. For example, a user may select one of the stroke positions by placing the magnet 608 at one of a position 3, position 4, or any position between position 3 and position 4. Additionally, the auxiliary signal may also be obtained. In such case, the processing circuit 708 may analyze and compare the selected stroke position as well as the auxiliary signal to identify a minimum of the selected stroke position and the auxiliary signal. Further, the processing circuit 708 may generate the first control signal to operate the actuating arm at an optimum stroke position i.e., the minimum of the selected stroke position and the auxiliary signal, so that the maximum valve flow rate can be controlled.

As referred above, the plurality of stroke positions may include one or more override positions indicating an override mode. In the override mode, the processing circuit 708 may override the auxiliary signal and generate the second control signal to operate the actuating arm based on the selected override position, when the magnet 608 is placed at one of the override positions. The override positions may be at least one of position 1, or position 2. i.e., a fully retracted stroke position or a fully extended stroke position. For example, if a user selects one of the override positions by placing the magnet 608 at one of the position 1 or position 2, then the processing circuit 708 may override the auxiliary signal and generate the second control signal to operate the actuating arm based on the selected override position. In this case, the actuating arm may further operate the valve assembly 604 at one of position 1 or position 2 such that the valve flow rate is either zero or maximum.

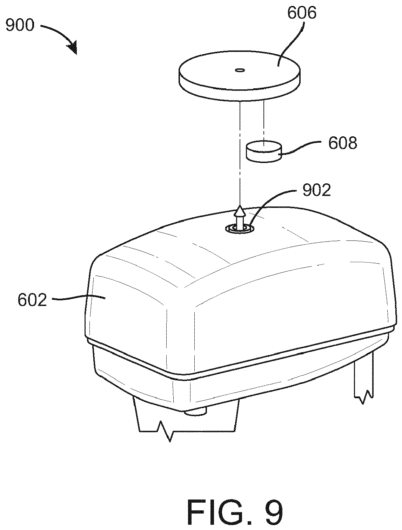

Referring now to FIG. 9, a configuration 900 of the magnetic slider integrated in the actuator enclosure 602 is shown, according to some embodiments. In some embodiments, any stroke position may be chosen using configuration 900. For example, a stroke position at any angle between 0 and 90 degrees can be chosen in some embodiments. In some embodiments, the stroke position can be a local, manual override of electronically provided stroke positions.

The configuration 900 shows the magnetic slider i.e., magnet 608 and the slider 606 integrated into the outer surface of the actuator enclosure 602. In some embodiments, the actuator enclosure 602 may be provided with an integrated support 902 via a hole in the actuator enclosure 602 to integrate the slider 606 into the actuator enclosure 602. For example, the integrated support 902 may be a pin that may be fixed on a center of the slider 606 such that the slider 606 is integrated into the actuator enclosure 602. Further, the magnet 608 may be placed on the slider 606. In the configuration 900, one or more indications corresponding to the plurality of stroke positions may be provided on the outer surface of the actuator enclosure 602. In the configuration 900, the slider 606 is shown as a rotatably movable slider configured to rotate and move to the plurality of stroke positions. However, the configuration 900 is not limited to the rotatably movable slider. In some other embodiments, the configuration 900 may have a linearly movable slider or any other type of slider.

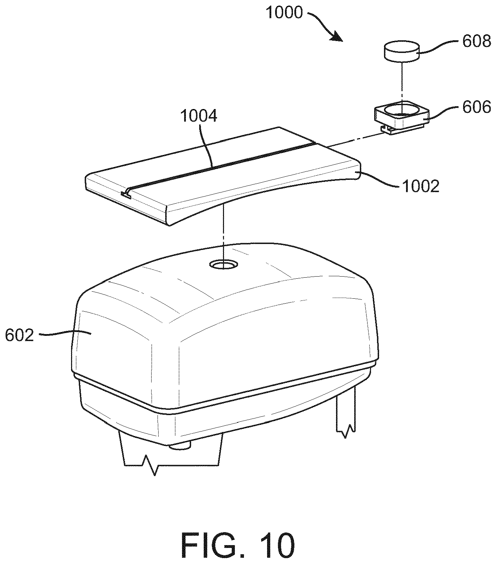

Referring now to FIG. 10, a configuration 1000 of the magnetic slider detachably coupled to the actuator enclosure 602 is shown, according to some embodiments. In some embodiments, any stroke position may be chosen using configuration 1000. In some embodiments, the stroke position can be a local, manual override of electronically provided stroke positions.

The configuration 1000 shows the magnetic slider i.e., the magnet 608 and the slider 606 as detachably coupled (provided as an add-on) over the outer surface of the actuator enclosure 602. The configuration 1000 eliminates the need to integrate the slider 606 into the actuator enclosure 602, unlike configuration 900. In some embodiments, a base plate 1002 may be detachably coupled to the actuator enclosure 602. The base plate 1002 may have a section 1004 for allowing the slider 606 to slide over the base plate 1002 to the plurality of stroke positions. For example, the slider 606 may be slidably mounted over the base plate 1002 and the magnet 608 may be placed over the slider 606. In some embodiments, one or more indications corresponding to the plurality of stroke positions may be provided over the base plate 1002. In the configuration 1000, the slider 606 is shown as a linearly movable slider. However, in other embodiments, the configuration 1000 may have a rotatably movable slider or any other type of slider.

In some embodiments, one or more stoppers (not shown) may be provided at each end of the section 1004 of the base plate 1002 to restrict movement of the slider 606 beyond the base plate 1002. The movement of the slider 606 causes a change in position of the magnet 608. The change in position of the magnet 608 may be sensed by the one or more sensors 702 (shown in FIG. 7) to determine a selected stroke position. Upon sensing the change in position, the sensors 702 may indicate the position of the magnet 608 i.e., the selected stroke position to the processing circuit 708. The processing circuit 708 may operate the actuating arm based on the selected stroke position and further the actuating arm may operate the valve assembly 604 based on the selected stroke position to achieve a desired valve flow rate. A slider may refer to an element that can be used to provide a selection. In some embodiments, a slider can be moved along a fixed arm or a fixed path. The slider can move on a linear, spiral, or circumferential path in some embodiments.

### Configuration of Exemplary Embodiments

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements can be reversed or otherwise varied and the nature or number of discrete elements or positions can be altered or varied. Accordingly, all such modifications are intended to be included within the scope of the present disclosure. The order or sequence of any process or method steps can be varied or re-sequenced according to alternative embodiments. Other substitutions, modifications, changes, and omissions can be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure can be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CDROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also two or more steps can be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

## Claims

1. An actuator, **characterized by**:
- an exterior housing;
- an actuating arm;
- a magnetic slider disposed on the exterior housing and configured to select one of a plurality of stroke positions of the actuating arm;
- one or more sensors configured to determine a selected stroke position; and
- a processing circuit configured to operate the actuating arm based on the selected stroke position.

2. The actuator of claim 1,
further **characterized in that** the processing circuit generates a first control signal to operate the actuating arm, where the first control signal is generated based on the selected stroke position and an auxiliary signal provided by a controller.

3. The actuator of claim 1,
further **characterized in that** the processing circuit generates a second control signal to operate the actuating arm, where the second control signal is generated based on the selected stroke position.

4. The actuator of claim 1,
further **characterized in that** the actuating arm is coupled to one of a valve, a damper, and a louver.

5. The actuator of any of claims 1-4,
further **characterized in that** the one or more sensors are selected from a group consisting of hall effect sensors, 3-D magnetic sensors, potentiometers, optical sensors, proximity sensors, and magneto-resistive sensors.

6. The actuator of any of claims 1-4,
further **characterized in that** the magnetic slider is one of a linearly movable magnetic slider and a rotatably movable magnetic slider.

7. The actuator any of claims 1-4,
further **characterized in that** the magnetic slider is provided on an outer surface of the exterior housing of the actuator.

8. The actuator of any of claims 1-4,
further **characterized in that** the magnetic slider is integral to the exterior housing.

9. The actuator of any of claims 1-4,
further **characterized in that** the magnetic slider is detachably coupled to the exterior housing.

10. A method of operating an actuator, the method **characterized by**:
- determining a position of a slider using magnetics, the slider being disposed on an exterior housing; and
- moving an actuating arm of the actuator to a stroke position of the actuating arm related to the position of the slider.

11. The method of claim 10,
further **characterized by** generating by a processing circuit a first control signal to operate the actuating arm, where the first control signal is generated based on the position of the slider and an auxiliary signal provided by a controller.

12. The method of claim 11,
further **characterized in that** the processing circuit generates a second control signal to operate the actuating arm, where the second control signal is generated based on the position of the slider.

13. The method of claim 11 or 12,
further **characterized in that** the actuating arm is coupled to one of a valve, a damper, and a louver.

14. The method of any of claims 11, 12, or 13,
further **characterized in that** one or more sensors are used for the determinig step and are selected from a group consisting of hall effect sensors, 3-D magnetic sensors, potentiometers, optical sensors, proximity sensors, and magneto-resistive sensors.

15. The method of any of claims 11-4,
further **characterized in that** the slider is one of a linearly movable magnetic slider and a rotatably movable magnetic slider.
